# FASCICULE DE BREVET EUROPEEN

(11) **EP 1 531 532 B1**
(45) Date de publication et mention de la délivrance du brevet: **31.05.2006**
(21) Numéro de dépôt: 04292488.6
(22) Date de dépôt: 20.10.2004
(51) Int. Cl.: H02G 3/08

(54) **Bride pour boîtier de servitude d'un moteur de véhicule motorisé, et boîtier équipé de cette bride**
Flansch für Zentralelektrikgehäuse eines Motors eines Kraftfahrzeugs, sowie mit diesem Flansch ausgestattetes Gehäuse
Flange for electrical supply housing of a motor of an automotive vehicle and housing equipped with this flange

(30) Priorité: 13.11.2003 FR 0313269
(43) Date de publication de la demande: 18.05.2005
(73) Titulaire: LE JOINT FRANCAIS, 75008 Paris (FR)
(72) Inventeur: Urbain, Didier, 49500 Ste Gennes d'Andigne (FR); Leonard, Xavier, 44370 Rouxiere (FR)
(74) Mandataire: Doireau, Marc

(56) Documents cités:
- FR-A- 1 342 949
- FR-A- 2 809 877
- US-A- 5 353 472
- US-A- 5 588 260
- PATENT ABSTRACTS OF JAPAN vol. 2000, no. 06, 22 septembre 2000 (2000-09-22) & JP 2000 071767 A (HARNESS SYST TECH RES LTD; SUMITOMO WIRING SYST LTD; SUMITOMO ELECTRIC), 7 mars 2000 (2000-03-07)
- PATENT ABSTRACTS OF JAPAN vol. 2002, no. 08, 5 août 2002 (2002-08-05) & JP 2002 101530 A (SUMITOMO WIRING SYST LTD), 5 avril 2002 (2002-04-05)

## Description

L'invention concerne une bride pour un boîtier de servitude d'un moteur de véhicule motorisé, ainsi qu'un boîtier équipé de cette bride.

D'une manière générale, un boîtier de servitude d'un moteur dénommé techniquement sous l'abréviation "BSM", est situé dans le compartiment moteur d'un véhicule motorisé. Dans un tel boîtier, on loge un ensemble de circuits électriques et/ou électroniques qui gèrent différentes fonctions de commande électriques et/ou électroniques du véhicule.

Selon l'art antérieur, en particulier dans le document US-A-5,588,260 et les articles parus dans la revue "PATENT ABSTRACTS OF JAPAN" du 22 septembre 2000 (vol. 2000, n° 6) & JP 2000 071 767 A, et "PATENT ABSTACTS OF JAPAN" du 5 août 2002 (vol. 2002, n° 8), JP 2002 101 530 A, on décrit des dispositifs passe-fil comprenant un corps fixé sur une porte de véhicule automobile et une partie tubulaire ondulée ne formant qu'une seule pièce monobloc avec ledit corps.

Un boîtier BSM est généralement constitué d'une embase de forme sensiblement parallélépipédique rectangle dans lequel est logé un ensemble de circuits électriques et/ou électroniques de commande communiquant à l'extérieur du boîtier par au moins une gaine principale de fils ou câbles qui sont raccordés à différents organes ou éléments du moteur. Les informations qui sont véhiculés par cette gaine principale de fils ou câbles sont soit des informations sortantes de commande, soit des informations entrantes qui sont traitées par l'ensemble des circuits électriques et/ou électroniques.

Concrètement, l'une des faces latérales du boîtier présente une échancrure, et cette échancrure est fermée de manière étanche par une plaque ou bride munie d'une ouverture pour le passage d'une gaine principale de fils avec la présence de moyens d'étanchéité rapportés entre l'ouverture de la bride et la gaine. Or, l'expérience montre que, lors des opérations d'assemblage du boîtier et/ou sous l'effet des vibrations engendrées lorsque le moteur est en fonctionnement, la gaine principale de fils ne se retrouve pas dans l'alignement de l'ouverture de la bride si bien que des défauts d'étanchéité apparaissent.

Un but de l'invention est de pallier cet inconvénient de l'étanchéité en concevant une bride et un passe-gaine parfaitement étanches entre eux.

A cet effet, l'invention propose une bride pour boîtier de servitude d'un moteur de véhicule motorisé, en particulier pour un boîtier "BSM" où est logé un ensemble de circuits électriques et/ou électroniques qui gèrent différentes fonctions de commandes électriques et/ou électroniques du véhicule, cette bride étant constituée d'une plaque rigide munie d'une ouverture et d'un passe-gaine monté autour de l'ouverture de la plaque pour le passage d'une gaine de fils ou câbles électriques, avec des moyens d'étanchéité entre ladite ouverture et ledit passe-gaine, qui est caractérisée en ce que le passe-gaine est souple et directement moulé de manière étanche autour de l'ouverture de la bride pour assurer l'étanchéité.

Selon un exemple de réalisation, ladite bride est fabriquée à partir d'un matériau thermoplastique, du polypropylène par exemple, et le passe-gaine est réalisé à partir d'un matériau élastomère thermoplastique TPE, sachant que les compositions des matériaux constitutifs de la bride et du passe-gaine permettent une adhérisation directe entre la bride et le passe-gaine sans couche d'adhérisation intermédiaire.

D'une manière générale, le passe-gaine est une enveloppe étanche comprenant une première extrémité qui recouvre l'ouverture de la bride, et une seconde extrémité dont le diamètre interne est inférieur au diamètre externe de la gaine de fils pour coincer de manière étanche ladite gaine, le passe-gaine pouvant présenter au moins un pli intermédiaire formant une charnière d'articulation.

Ainsi, la position du passe-gaine de la bride selon l'invention est parfaitement indexée par rapport à la partie rigide de la bride, et l'étanchéité est ainsi parfaitement garantie. Par ailleurs, le montage d'une telle bride est grandement facilité sur le boîtier.

L'invention a également pour objet un boîtier de servitude d'un moteur de véhicule motorisé, ce boîtier étant de forme sensiblement parallélépipédique rectangle, avec une face ouverte bordée de quatre faces latérales, et présentant au moins une échancrure sur l'une de ses faces latérales, et dans lequel l'échancrure est obturée par une bride selon l'invention.

D'autres avantages, caractéristiques et détails de l'invention ressortiront du complément de description qui va suivre en référence à des dessins annexés, donnés uniquement à titre d'exemple et dans lesquels :
- la figure 1 est une vue en perspective partielle d'un boîtier BSM avec au moins une échancrure dans l'un de ses côtés pour recevoir une bride selon l'invention ;
- la figure 2 est une vue en perspective d'un exemple de réalisation d'une bride selon l'invention ;
- la figure 3 est une vue selon la flèche III de la figure 2 ; et
- la figure 4 est une vue en coupe longitudinale de la figure 3.

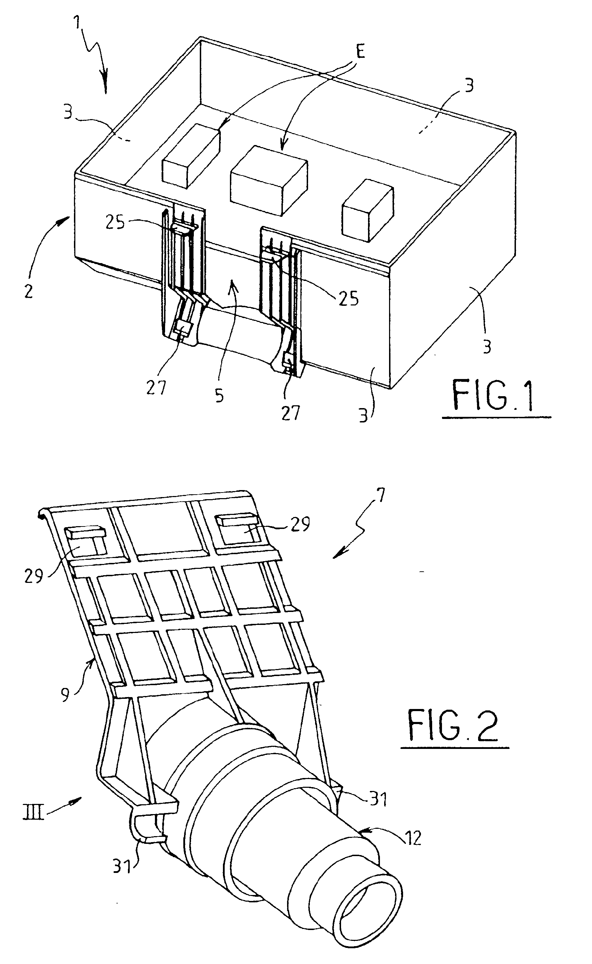

La figure 1 illustre schématiquement un boîtier 1 de servitude d'un moteur ou "BSM" de véhicule motorisé. Ce boîtier 1 comprend une embase 2 qui est globalement de forme sensiblement parallélépipédique rectangle avec une face ouverte qui est bordée de quatre faces latérales 3. Un ensemble E de circuits électriques et/ou électroniques est logé à l'intérieur du boîtier 1 qui est fermé de manière étanche par un couvercle (non représenté).

L'ensemble E de circuits communique avec l'extérieur par au moins une échancrure 5 présente dans une face latérale 3 du boîtier 1 et qui est fermée de manière étanche par une bride ou plaque 7 selon l'invention et qui est illustrée sur les figures 2 à 4.

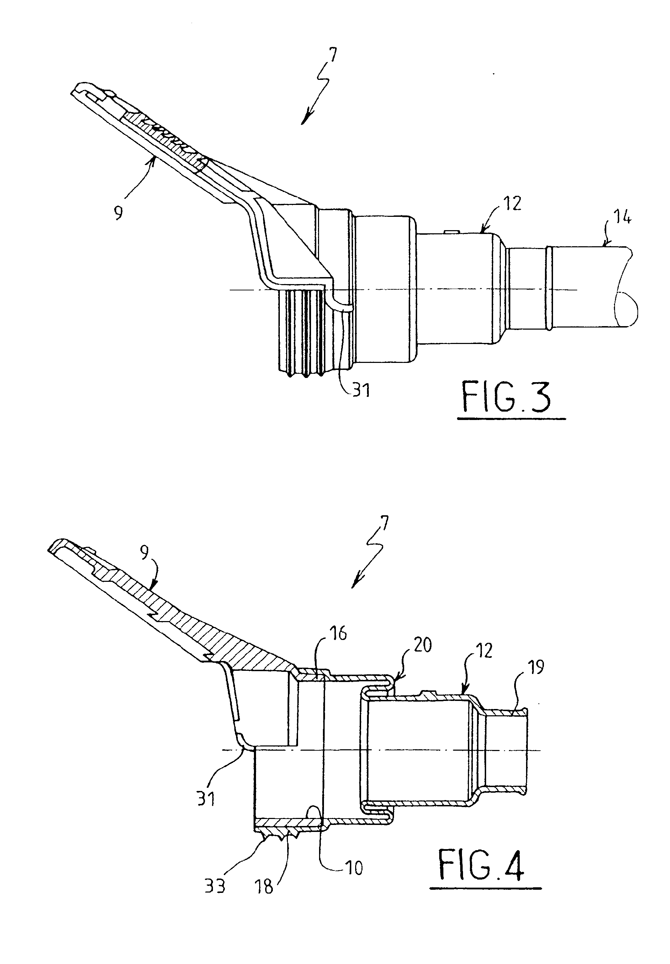

Cette bride 7 forme une seule pièce qui est constituée de deux parties : une première partie rigide 9 apte à être rapportée de manière étanche dans l'échancrure 5 du boîtier 1 et qui présente une ouverture 10 (figure 4), de forme circulaire par exemple, et une seconde partie souple ou passe-gaine 12 pour le passage d'une gaine ou toron 14 de fils et/ou câbles électriques (figure 3).

La partie rigide 9 est réalisée à partir d'une matière thermoplastique telle du polypropylène par exemple, et la partie souple ou passe-gaine 12 est réalisée à partir d'une matière thermoplastique élastomère TPE. La fabrication de la bride 7 s'effectue par l'injection dans un moule de la matière thermoplastique pour réaliser la partie rigide 9, et on surmoule ensuite la matière thermoplastique élastomère pour réaliser le passe-gaine 12. La constitution des deux matériaux constitutifs de la bride 7 est telle que l'on obtient une adhérisation directe entre les deux matériaux sans qu'il soit nécessaire de prévoir un agent adhérisant pour assurer la solidarisation. L'ouverture 10 ménagée dans la partie rigide 9 est délimitée par une portion de cylindre 16 (figure 4), et une extrémité 18 du passe-gaine 12 vient adhériser autour de la portion de cylindre 16. L'autre extrémité ou extrémité libre 19 du passe-gaine 12 présente un diamètre interne inférieur à celui de son extrémité solidaire de la partie rigide 9, et elle vient se serrer de manière étanche autour de la gaine ou toron 14 de fils et/ou câbles électriques.

Avantageusement, un pli 20 est formé dans la partie intermédiaire du passe-gaine et forme une articulation.

De part et d'autre de l'échancrure 5 du boîtier 1 (figure 1) sont respectivement prévues deux pattes de montage et de verrouillage 25 en partie haute, et deux ouvertures 27 en partie basse. De manière complémentaire, la partie rigide 9 de la bride 7 présente deux ouvertures 29 (figure 2) destinées à se recevoir de manière étanche les deux pattes 25 du boîtier 1, et deux pattes courbées 31 destinées à pénétrer de manière étanche dans les deux ouvertures 27 du boîtier 1. Les deux pattes 31 de la bride 7 sont situées respectivement de part et d'autre de l'ouverture 10 de la bride 7.

Au montage, on vient loger les deux pattes courbées 31 de la bride 7 dans les deux ouvertures 27 du boîtier 1, et par un mouvement pivotant de la bride 7, on vient loger les deux pattes 25 du boîtier 1 dans les deux ouvertures 29 de la bride 7. Pour parfaire l'étanchéité entre le boîtier 1 et la bride 7 au niveau des ouvertures 27 du boîtier 1, le passe-gaine 12 présente des nervures d'étanchéité 33 autour de la portion de cylindre 16 de la partie fixe 9 de la bride 7 (figure 4).

Dans le mode de réalisation décrit aux figures 2 à 4, la partie fixe 9 de la bride 7 et le passe-gaine 20 font entre eux un angle de l'ordre de 120°.

## Revendications

1. Bride pour boîtier de servitude d'un moteur de véhicule motorisé, en particulier pour un boîtier « BSM » où est logé un ensemble de circuits électriques et/ou électroniques qui gèrent différentes fonctions de commandes électriques et/ou électroniques du véhicule, cette bride (7) étant constitué d'une plaque rigide (9) munie d'une ouverture (10), et d'un passe-gaine (12) monté autour de l'ouverture (10) de la plaque (9) pour le passage d'une gaine (14) de fils ou câbles électriques, avec des moyens d'étanchéité entre ladite ouverture et ledit passe-gaine (12), **caractérisée en ce que** le passe-gaine (12) est souple et directement moulé de manière étanche autour de l'ouverture (10) de la bride (7) pour assurer l'étanchéité.

2. Bride selon la revendication 1, dans laquelle la plaque rigide (9) de ladite bride (7) est fabriquée à partir d'un matériau thermoplastique, du polypropylène par exemple, et dans laquelle le passe-gaine (12) est réalisé à partir d'un matériau élastomère thermoplastique TPE.

3. Bride selon la revendication 1 ou 2, dans laquelle le passe-gaine (12) est une enveloppe étanche comprenant une première extrémité (18) qui recouvre l'ouverture (10) de la bride (7), et une seconde extrémité (19) dont le diamètre interne est inférieur au diamètre externe de la gaine de fils (14) pour coincer de manière étanche ladite gaine.

4. Bride selon la revendication 3, dans laquelle le passe-gaine (12) présente au moins un pli intermédiaire (20) formant une charnière d'articulation.

5. Boîtier de servitude d'un moteur de véhicule motorisé, en particulier pour un boîtier « BSM» où est logé un ensemble de circuits électriques et/ou électroniques qui gèrent différentes fonctions de commandes électriques et/ou électroniques du véhicule, ce boîtier (1) étant de forme sensiblement parallélépipédique rectangle, avec une face ouverte bordée de quatre faces latérales, et présentant au moins une échancrure (5) sur l'une de ses faces latérales, et dans lequel l'échancrure (5) est obturée par une bride (7) selon l'une des revendications précédentes.

## Claims

1. Flange for electrical supply housing of a motor of an automotive vehicle, particularly for a "BSM" housing in which is housed a set of electric and/or electronic circuits which manage different functions of electric and/or electronic controls of the vehicle, this flange (7) consisting of a rigid plate (9) provided with an opening (10), and a sheath support (12) mounted around the opening (10) in the plate (9) for passing a sheath (14) of electric wires or cables therethrough, with sealing means between said opening and said sheath support (12), **characterised in that** the sheath support (12) is flexible and moulded directly in leaktight manner around the opening (10) in the flange (7) so as to provide a seal.

2. Flange according to claim 1, wherein the rigid plate (9) of the flange (7) is made of a thermoplastic material, such as polypropylene, for example, and wherein the sheath support (12) is made of a thermoplastic elastomeric material TPE.

3. Flange according to claim 1 or 2, wherein the sheath support (12) is a leaktight casing comprising a first end (18) that covers the opening (10) of the flange (7), and a second end (19) the internal diameter of which is less than the outer diameter of the wire sheath (14) so as to grip the sheath in a sealing manner.

4. Flange according to claim 3, wherein the sheath support (12) has at least one intermediate fold (20) forming an articulation hinge.

5. Electrical supply housing of a motor of an automotive vehicle, particularly for a "BSM" housing in which is housed a set of electric and/or electronic circuits which manage different functions of electric and/or electronic controls of the vehicle, this housing (1) being substantially rectangular and cuboid in shape, with one open side surrounded by four lateral sides, and having at least one notch (5) on one of its lateral sides, and wherein the notch (5) is covered by a flange (7) according to one of the preceding claims.

## Patentansprüche

1. Flansch für ein Motorsteuerungsgehäuse eines Kraftfahrzeugs, insbesondere für ein "BSM"-Gehäuse, in welchem eine Gruppe von elektrischen und/oder elektronischen Schaltungen untergebracht ist, welche unterschiedliche elektrische und/oder elektronische Steuerfunktionen des Fahrzeugs verwalten, wobei dieser Flansch (7) gebildet ist durch eine starre Platte (9), welche mit einer Öffnung (10) versehen ist, und eine Durchgangshülse (12), welche für den Durchgang einer Umhüllung (14) für elektrische Drähte oder Kabel um die Öffnung (10) der Platte (9) herum angebracht ist, mit Dichtungsmitteln zwischen der Öffnung und der Durchgangshülse (12),
**dadurch gekennzeichnet,**
**dass** die Durchgangshülse (12) flexibel ist und direkt auf abdichtende Weise um die Öffnung (10) des Flansches (7) herum geformt ist, um die Dichtigkeit sicherzustellen.

2. Flansch nach Anspruch 1, wobei die starre Platte (9) des Flansches (7) ausgehend von einem thermoplastischen Material, zum Beispiel Polypropylen, hergestellt ist und wobei die Durchgangshülse (12) ausgehend von einem thermoplastischen elastomeren Material TPE realisiert ist.

3. Flansch nach Anspruch 1 oder 2, wobei die Durchgangshülse (12) eine dichte Hülle ist, welche ein erstes Ende (18), das die Öffnung (10) des Flansches (7) bedeckt, und ein zweites Ende (19), dessen Innendurchmesser geringer ist als der Außendurchmesser der Drahtumhüllung (14), um die Umhüllung auf abdichtende Weise einzuzwängen, umfasst.

4. Flansch nach Anspruch 3, wobei die Durchgangshülse (12) wenigstens eine Zwischenfalte (20) aufweist, welche ein Gelenkscharnier bildet.

5. Motorsteuerungsgehäuse für ein Kraftfahrzeug, insbesondere ein "BSM"-Gehäuse, in welchem eine Gruppe von elektrischen und/oder elektronischen Schaltungen untergebracht ist, die unterschiedliche elektrische und/oder elektronische Steuerfunktionen des Fahrzeugs verwalten, wobei das Gehäuse (1) von im Wesentlichen rechtwinkliger Parallelepipedform ist, mit einer offenen Seite, welche von vier lateralen Seiten begrenzt ist, und wenigstens einen Einschnitt (5) auf einer seiner lateralen Seiten aufweist, und wobei der Einschnitt (5) durch einen Flansch (7) nach einem der vorhergehenden Ansprüche verschlossen ist.
